# EUROPEAN PATENT APPLICATION

(11) **EP 1 418 587 A1**
(43) Date of publication of application: **12.05.2004**
(21) Application number: 03025008.8
(22) Date of filing: 30.10.2003
(51) Int. Cl.: G11B 27/34, H04N 5/76

(54) **Recording and reproduction apparatus**

(30) Priority: 06.11.2002 JP 2002323136
(71) Applicant: Orion Electric Company, Ltd., Takefu-shi, Fukui-ken (JP)
(72) Inventor: Ozaki, Koichi, Takefu-shi Fukui-ken (JP)
(74) Representative: Kirschner, Klaus Dieter, Dipl.-Phys.

(57) **Abstract**

This invention facilitates a genre setting made when program date is newly recorded. A search is conducted to determine whether a day of week, a channel, a recording start time, and a recording end time as recording information on newly recorded program data coincide with recording information in a genre database for previously recorded program data. If the recording information coincident with the new recording is present, a genre for the coincident recording information is set as a genre for the new recording information. If no coincident recording information is present, the new recording information is set as recording information without a genre.

## Description

### BACKGROUND OF THE INVENTION

### Field of the Invention

The present invention relates to a recording and reproduction apparatus which records program data, such as a program data on a television broadcasting program, on a recording medium based on reserved information and which reproduces this program data.

### Description of the Related Art

If the recording of, for example, a television broadcasting program is reserved, program data is recorded as a file on a randomly accessible hard disk or a rewritable recording disk such as a DVD-RAM or DVD-RW.

When the recording of a program is reserved, recording information necessary for recording the program data such as a day of week, a channel, a recording start time, a recording end time, and a recording mode is input. When it is the set time, the program data is recorded on a recording medium and one file is thereby created. This file is allocated a file name as program information and the above-stated recording information is recorded in a predetermined region of the recording medium.

As additional information related to a program that is the recorded program, a genre such as a drama, news, a movie or sports can be set. By designating the genre and searching the program information, a program in a desired genre can be easily found. This enables promptly reproducing desired program data. In addition, the classification of pieces of program data according to genres facilitates editing such as the output of the program data to an external recording medium.

According to, for example, Japanese Patent Application Laid-Open No. 2002-150754 (paragraphs 0022, 0023, and 0100), program information such as a recording start date, a recording end date, a channel, and a genre is created at the time of recording each program data and the created program information is recorded on a recording medium. The program information is searched and program information in a specific genre is displayed.

While the recording information necessary for the program data is automatically recorded, the additional information on the program data is input by a user. Since the recording information is displayed as a list on a television screen, a monitor or the like, the user selects one program data from this list. If the user selects an appropriate genre from this list and sets the genre, the genre thus set is recorded on the recording medium and added as the program information. If a plurality of pieces of program data to which additional information is to be added, respectively, are present, this setting operation is repeatedly carried out.

As stated above, the additional information is required to be input by the user. Due to this, if the same program as that recorded in the past, such as a series program, is recorded, additional information such as the genre should be set again for the new program data despite the same recording information. At the setting, an operation for calling the recording information list or the like should be carried out, which disadvantageously requires labor for the setting.

### SUMMARY OF THE INVENTION

The present invention has been made in view of these conventional disadvantage. It is, therefore, an object of the present invention to provide a recording and reproduction apparatus capable of easily setting additional information when program data having the same program information as previously input recording information.

According to a first aspect of the present invention, there is provided a recording and reproduction apparatus including: recording means for recording pieces of recording information each for recording program data, and recording additional information related to a program; search means for searching the pieces of recorded recording information relative to input new recording information; and setting means for setting the additional information for the recording information coincident with the new recording information as the additional information for the new recording information.

Pieces of previous recording information are searched to determine whether the previous recording information coincident with the new recording information is present. If the coincident recording information is present, programs for the recording information are a series program that is broadcast every day. As a result, the new recording information and the coincident recording information are equal in additional information. Therefore, the searched additional information. is automatically set as additional information for the new recording information.

As a concrete constitution, the recording and reproduction apparatus includes: a recording and reproduction portion which records program data to a recording medium and which reproduces the recorded program data; an input portion which inputs recording information necessary when recording the program data, and which inputs additional information related to a program; a recording portion which records the recording information and the additional information; and a control portion which drives the recording and reproduction portion based on the recording information. The recording means consists of a recording and reproduction portion and the recording portion. The recording information and the additional information are recorded on the recording medium, which recording medium is the recording portion.

The control portion includes : search means for searching the recording information recorded on the recording portion when new recording information is input, to determine whether the new recording information coincides with the recording information recorded on the recording portion; and setting means for setting the additional information for the coincident recording information as additional information for the new recording information if the recording information coincident with the new recording information is present.

The new recording information and the automatically set additional information are recorded on the recording portion. As the recording portion, a recording medium which records program data or the other recording medium ia employed. If recording information coincident with the new recording information is not present, additional information input by a user is recorded.

### BRIEF DESCRIPTION OF THE DRAWINGS

Fig. 1 is a schematic block diagram of a recording and reproduction apparatus in one embodiment according to the present invention;
Fig. 2 is a flow chart for newly making a genre setting;
Fig. 3 illustrates one example of a genre database; and
Fig. 4 is a flow chart for making a genre setting for newly recorded program data.

### DETAILED DESCRIPTION OF THE PREFERRED EMBODIMENT

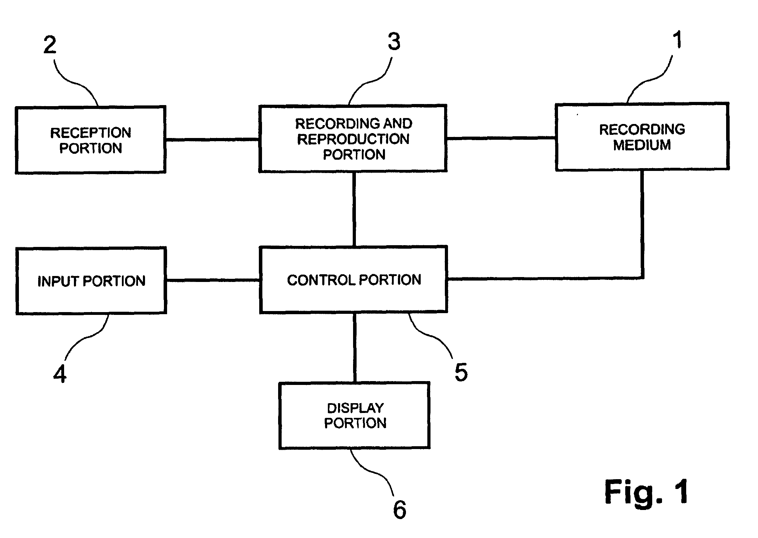

Fig. 1 illustrates a recording and reproduction apparatus in one embodiment according to the present invention. This recording and reproduction apparatus includes a hard disk as a randomly accessible recording medium 1, and consists of the recording medium 1, a reception portion 2, a recording and reproduction portion 3, an input portion 4, and a control portion 5.

The reception portion 2 is, for example, a tuner which receives signals from terrestrial broadcastings and satellite broadcastings or signals from a cable network. The reception portion 2 selects a signal of a selected channel and outputs a video signal of a received program to the recording and reproduction portion 3. The recording and reproduction portion 3 demodulates the video signal or converts the video signal to a digital signal, encodes the digital video signal, and records the encoded signal on the recording medium 1 as program data. The program data is written to a predetermined region of the hard disk 1. Consequently, a file is created in the hard disk 1.

If the recorded program data is reproduced, the recording and reproduction portion 3 reads the file from the hard disk 1, decodes the encoded video signal to an analog signal, and outputs the analog video signal to the display portion 6 such as a television screen or a monitor and to a loudspeaker.

The input portion 4 is, for example, a remote controller or an operation panel on an apparatus main body. The input portion 4 transmits an instruction to record or reproduce a program or to edit a file. The control portion 5 controls the reception portion 2, the recording and reproduction portion 3, and the display portion 6 based on a content input from the input portion 4.

Program information on the program data recorded on the recording medium 1 consists of recording' information, such as a file name, a date, a day of week, a recording start time, a recording end time, a channel, and a recording mode, necessary when recording the program data and additional information related to the program, that is, a genre. The control portion 5 manages a plurality of files based on pieces of program information.

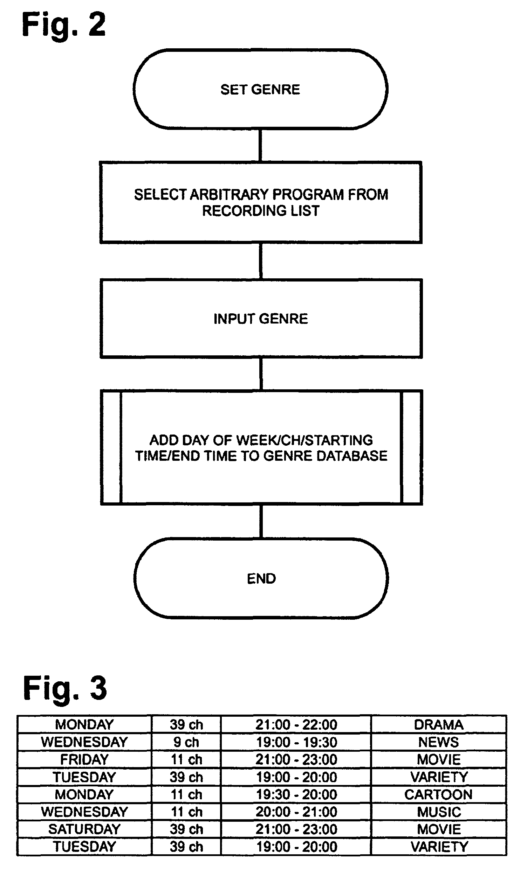

When the information necessary for recording program data is input from the input portion 4, the control portion 5 automatically records the input information on the recording medium 1 as recording information. In addition, the control portion 5 records the genre input by the user. Namely, as shown in Fig. 2 , during a genre setting, the control portion 5 displays a recording list that shows recorded program data on a screen of the display portion 6. If arbitrary program i's selected from those in the recording list and a genre related to this selected program is input, the control portion 5 records the input genre as a part of the program information on the selected program. The control portion 5 carries out this input operation by selecting one corresponding genre from among a plurality of preset genres. Alternatively, the user may input the genre arbitrarily.

Based on the day of week, the channel, the recording start time, and the recording end time as the recording information and the input genre, a genre database shown in Fig. 3 is created and the Created genre database is recorded on the recording medium 1. The display portion 6 displays a recording list based on this genre database and provides the program information to the user.

In this case, the genre setting is made when the recording list is called after new program data is recorded. However, if program information in the same recording information as that input previously is recorded, the genre is automatically set. To this end, the control portion 5 includes search means for doing a search to determine whether new recording information coincides with the recording information already recorded on the recording medium 1 when the new recording information is input, and setting means for setting the genre for the recording information as a genre for the new recording information if the recording information coincident with the new recording information is present.

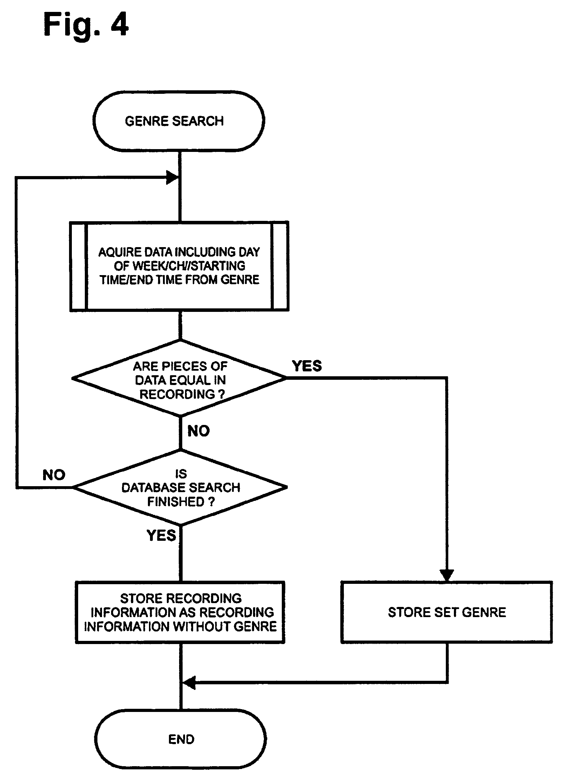

Procedures for automatically setting a genre of program data will be described with reference to Fig. 4. To record a new program, recording information such as a day of week and a recording start time is input. Program data is recorded based on this recording information and the recording information is also recorded. At this time, the search means acquires the respective pieces of data of the day of week, the channel, the recording start time, and the recording end time from the genre database created in advance. The search means then determines whether the respective pieces of data coincide with those of newly input recording information.

If they coincide, the setting means sets and records the genre set for the coincident recording information as a genre for the new recording information. In this way, for a series program such as a program that is broadcast every week, the genre is automatically set. This can dispense with a labor for a setting operation and lessen a user's burden.

If they do not coincide, the search means searches the other recording information in the genre database one by one. Even if all pieces of recording information are searched, no coincident data of the recording information is present. In this case, the setting means sets the program data as one without a genre. Thereafter, if the user inputs a new genre, the new genre is recorded as a genre of the new program data.

The genre setting is made after recording the program data. Alternatively, the genre setting may be made before recording. Namely, if the recording information is input, the genre setting is made simultaneously with the input. If the program data is recorded using a G code (trademark) or recorded by operating a recording key in the input portion, the program data is recorded without inputting the recording information thereon. Therefore, the genre of the program data is set after recording the program data.

The present invention is not limited to the above-stated embodiment. Needless to say, various changes and modifications can be made to the embodiment within a scope of the present invention. The recording medium is not limited to the hard disk but may be a rewritable DVD, CD or MD, or a semiconductor memory. The recording medium may be a video tape, in which case the program information is recorded on another recording medium such as a nonvolatile memory. Further, the program information may be recorded on a different recording medium from that on which the program data is recorded. For example, a composite equipment which can record and reproduce a plurality of types of recording mediums, a detachable recording medium such as a DVD can be used. Therefore, program information on program data recorded on each recording medium is recorded on one recording medium included in the equipment such as a hard disk. This makes it possible to unitarily manage many recording mediums. Further, not only the genre but also a program name, performers, a name of a user who records the program may be set as additional information.

When searching the recording information in the genre database, the search may be conducted under conditions that the respective pieces of data are partially coincident instead of under conditions that the respective pieces of data are completely coincident. In this case, the recording information including the recording start time and the recording end time close to those of the newly input recording information and the other pieces of data coincident with those of the newly input recording data may be searched. Namely, the user does not necessarily input the recording start time and the recording end time accurately but often sets a time earlier than the actual recording start time or a time later than the actual recording end time. Due to this, a time that falls within a predetermined allocable range, e.g., within ± two seconds of a search target time is regarded as coincident time and a genre for this recording information is set.

Furthermore, the search may be conducted using a date instead of the day of week as a search coincidence condition. Pieces of recording information each including a date seven days shifted from a search target date are selected and the recording information including the other pieces of data coincident with those of the new recording information is searched. By doing so, a series program that is broadcast every week can be searched. Furthermore, recording information that includes the channel, the recording start time, and the recording end time coincident with those of the new recording information and which includes the day of week or date shifted by one day from that of the new recording information is searched. By doing so, a series program broadcast every day can be searched. At the time of conducting the above-stated search and making a genre setting for the recording information, a correct genre can be set by displaying a message for checking whether the genre setting can be made before recording.

As is obvious from the above, according to the present invention, the previous recording information is searched based on the new recording information. By doing so, if the recording information coincident with the new recording information is present, programs for the coincident recording information can be regarded as a series program. If so, since the additional information such as the genre on the previous recording information is the same as that on the new recording information, the additional information on the previous recording information is automatically set as additional information on the new recording information. This can dispense with a labor for setting the additional information, thereby improving the Operativity of apparatus.

## Claims

1. A recording and reproduction apparatus comprising
recording means for recording pieces of recording information each for recording program data, and recording additional information related to a program;
search means for searching the pieces of recorded recording information relative to input new recording information; and
setting means for setting the additional information for the recording information coincident with the new recording information as the additional information for the new recording information,

2. A recording and reproduction apparatus comprising:
a recording and reproduction portion which records program data to a recording medium and which reproduces the recorded program data;
an input portion which inputs recording information necessary when recording the program data, and which inputs additional information related to a program;
a recording portion which records the recording information and the additional information; and
a control portion which drives the recording and reproduction portion based on the recording information, wherein
the control portion comprises:
search means for searching the recording information recorded on the recording portion when new recording information, is input, to determine whether the new recording information coincides with the recording information recorded on the recording portion; and
setting means for setting the additional information for the coincident recording information as additional information for the new recording information if the recording information coincident with the new recording information is present, and wherein
the new recording information and the additional information set for the new recording information are recorded on the recording portion.
